# EUROPÄISCHE PATENTSCHRIFT

(11) **EP 1 311 577 B1**
(45) Veröffentlichungstag und Bekanntmachung des Hinweises auf die Patenterteilung: **09.11.2005**
(21) Anmeldenummer: 01974207.1
(22) Anmeldetag: 22.08.2001
(51) Int. Cl.: C08G 18/38, C08G 18/08, C08G 18/67, C09D 175/14

(54) **WÄSSRIGE DISPERSION UND IHRE VERWENDUNG ZUR HERSTELLUNG VON THERMISCH UND MIT AKTINISCHER STRAHLUNG HÄRTBAREN BESCHICHTUNGSSTOFFEN, KLEBSTOFFEN UND DICHTMASSEN**
AQUEOUS DISPERSION AND THE USE THEREOF IN THE PRODUCTION OF COATING AGENTS, ADHESIVES AND SEALING AGENTS THAT CAN CURED BY HEAT OR BY ACTINIC RADIATION
DISPERSION AQUEUSE ET SON UTILISATION POUR PREPARER DES MATIERES DE REVETEMENT, DES ADHESIFS ET DES MASSES D'ETANCHEITE POUVANT ETRE DURCIES THERMIQUEMENT ET AVEC UN RAYONNEMENT ACTINIQUE

(30) Priorität: 24.08.2000 DE 10041634
(43) Veröffentlichungstag der Anmeldung: 21.05.2003
(73) Patentinhaber: BASF Coatings AG, 48165 Münster (DE)
(72) Erfinder: BAUMGART, Hubert, 48163 Münster (DE); MEISENBURG, Uwe, 47051 Duisburg (DE); TOBOLL, Petra, 48329 Havixbeck (DE); JOOST, Karl-Heinz, 48317 Drensteinfurt (DE); SCHWALM, Reinhold, 67157 Wachenheim (DE)
(74) Vertreter: Fitzner, Ulrich
(86) Internationale Anmeldenummer: PCT/EP2001/009699
(87) Internationale Veröffentlichungsnummer: WO 2002/016459

(56) Entgegenhaltungen:
- EP-A- 0 841 357
- DE-A- 19 961 926
- DE-C- 19 722 862
- US-A- 5 726 274

## Beschreibung

Die vorliegende Erfindung betrifft eine neue wäßrige Dispersion. Außerdem betrifft die vorliegende Erfindung ein neues Verfahren zur Herstellung wäßriger Dispersionen. Des weiteren betrifft die vorliegende Erfindung die Verwendung der neuen wäßrigen Dispersionen zur Herstellung von thermisch und mit aktinischer Strahlung härtbaren Beschichtungsstoffen, Klebstoffen und Dichtungsmassen. Nicht zuletzt beftifft die vorliegende Erfindung neue thermisch und mit aktinischer Strahlung härtbare Beschichtungsstoffe, Klebstoffe und Dichtungsmassen. Darüber hinaus betrifft die vorliegende Erfindung die Verwendung der neuen thermisch und mit aktinischer Strahlung härtbaren Beschichtungsstoffe, Klebstoffe und Dichtungsmassen für die Herstellung von neuen Beschichtungen, Klebschichten und Dichtungen.

An Automobilserien- und -reparaturlackierungen werden von den Automobilherstellern und deren Kunden wachsende Anforderungen hinsichtlich der Korrosionsbeständigkeit, der mechanische Stabilität, beispielsweise Kratzfestigkeit gegenüber Waschbürsten, der Steinschlagfestigkeit und des optischen Gesamteindrucks, inklusive der optischen Effekte, gestellt. Bekanntermaßen wird dies in einem gewissen Umfang durch eine mehrschichtige Lackierung erfüllt, die auf einem Karosserieblech eine Elektrotauchlackierung, eine Füllerlackierung oder Steinschlagschutzgrundierung sowie eine farb- und/oder effektgebende Mehrschichtlackierung aus einer farb- und/oder effektgebenden Basislackierung und mindestens einer Klarlackierung übereinanderliegend enthält.

Darüber hinaus sollen aber die Lackierungen auch noch die in den letzten Jahren stetig gestiegenen ökologischen Anforderungen, wie die Reduktion des Gehalts an organischen Lösemitteln oder völlige Lösemittelfreiheit, erfüllen.

Im Zuge dieser Entwicklungen haben sich allmählich wäßrige Lacke durchsetzen können. So sind die Elektrotauchlacke bereits seit langem nahezu frei von leichtflüchtigen organischen Bestandteilen, insbesondere organischen Lösemitteln. Ebenso stehen wäßrige Beschichtungsstoff auf der Basis von Polyurethanen zur Verfügung, die der Herstellung von Füllerlackierungen oder Steinschlagschutzgrundierungen dienen (vgl. die Patentschriften DE 4005 961A 1 und EP 0 548 873 A 1).

Auch die Verwendung von Wasserbasislacken, wie sie beispielsweise in den Patentschrift DE 197 22 862 C1 beschrieben werden, hat wesentliche Fortschritte mit sich gebracht und die Emissionen flüchtiger organischer Bestandteile nachhaltig verringert.

Inzwischen stehen auch lösemittelfreie oder weitgehend lösemittelfreie Klarlacke wie wäßrige Zweikomponenten(2K)- oder Mehrkompoüenten(3K, 4K)-Klarlacke, Pulverklarlacke, Pulversluny-Klarlacke oder flüssige, lösemittelfreie, mit aktinischer Strahlung härtbare Klarlacke (100%-Systeme) zur Verfügung.

Bei der aktinischen Strahlung kann es sich um elektromagnetische Strahlung wie sichtbares Licht, UV-Licht oder Röntgenstrahlung oder um Korpuskularstrnhlung wie Elektronenstrahlung handeln.

Wäßrige Zweikomponenten(2K)- oder Mehrkomponenten(3K, 4K)-Klarlacke gehen beispielsweise aus der deutschen Patentschrift DE 44 21 823 A 1 hervor. Zweikomponenten(2K)- oder Mehrkomponenten(3K, 4K)-Klarlacke enthalten bekanntermaßen als wesentliche Bestandteile hydroxylgruppenhaltige Bindemittel und Polyisocyanate als Vemetzungsmittel, welche bis zu ihrer Verwendung getrennt gelagert werden müssen.

Pulverklarlacke sind beispielsweise aus der deutschen Patentschrift DE 42 22 194 A 1 oder der Produkt-Information der Firma BASF Lacke + Farben AG, "Pulverlacke", 1990 bekannt. Pulverklarlacke enthalten als wesentliche Bestandteile bekanntermaßen epoxidgruppenhaltige Bindemittel und Polycarbonsäuren als Vernetzungsmittel.

Pulverslurry-Klarlacke sind beispielsweise aus der US-Patentschrift US 4,268,542 A, der internationalen Patentanmeldung WO 96/32452 und den deutschen Patentanmeldungen DE 195 18 392 A 1 und DE 196 13 547 A 1 bekannt oder werden in der nicht vorveröffentlichten deutschen Patentanmeldung DE 198 14 471.7 beschrieben. Pulverslurry-Klarlacke enthalten bekanntermaßen Pulverklarlacke in einem wäßrigen Medium dispergiert.

Mit aktinischer Strahlung härtbare Klarlacke gehen beispielsweise aus den Patentschriften EP 0 540 884 A 1, EP 0 568 967 A 1 oder US 4,675,234 A hervor. Sie enthalten bekanntermaßen mit aktinischem Licht und/oder Elektronenstrahlung härtbare niedermolekulare, oligomere und/oder polymere Verbindungen, vorzugsweise strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel eingesetzt, die frei von aromatischen Struktureinheiten sind.

Aus der europäischen Patentanmeldung EP 0 928 800 A 1 ist ein thermisch und mit aktinischer Strahlung härtbarer Dual Cure-Beschichtungsstoff bekannt, der ein Urethan(meth)acrylat mit freien Isocyanatgruppen und (Meth)Acryloylgruppen, einen Photoinitiator und eine isocyanatreaktive Verbindung, insbesondere ein Polyol oder Polyamin, enthält. Dieser Dual Cure-Beschichtungsstoff bietet die Möglichkeit, die Eigenschaftsprofile von Beschichtungsstoff und von Beschichtung zu variieren und gezielt an unterschiedliche Verwendungszwecke anzupassen.

Der Nachteil der bekannten Dual Cure-Beschichtungsstoffe liegt darin, daß es sich um sogenannte Zweikomponentensysteme handelt, bei denen die Bestandteile, die freie Isocyanatgruppen enthalten, bis zur Applikation unter Ausschluß von Wasser bzw. getrennt von den Bestandteilen, die die isocyanatreaktiven Gruppen enthalten, gelagert werden müssen, um eine vorzeitige Vernetzung zu vermeiden. Dies erfordert aber einen höheren technischen und planerischen Aufwand bei der Lagerung, der Herstellung und der Applikation.

Vorzugsweise werden die bekannten Wasserbasislacke und Klarlacke im Rahmen der Herstellung von farb- und/oder effektgebenden Mehrschichtlackierungen nach dem sogenannten Naß-in-naß-Verfahren verarbeitet. Bekanntermaßen wird bei dem Naß-in-naß-Verfahren ein Basislack auf ein grundiertes oder ungrundiertes Substrat appliziert, wonach man die resultierende Basislackschicht trocknet, mit einem Klarlack überschichtet und die resultierende Klarlackschicht gemeinsam mit der Basislackschicht härtet, wodurch die Mehrschichtlackierung aus farb- und/oder effektgebender Basislackierung und schützender Klarlackierung resultiert.

Bei dem Naß-in-naß-Verfahren weisen die einzelnen Klarlacktypen spezifische Stärken und Schwächen auf.

So können die wäßrigen Klarlacke bei oder nach ihrer Applikation ein Einbrechen in die getrocknete Wasserbasislackschicht zeigen. Pulverklarlacke können einen nicht ausreichenden Verlauf während der Härtung aufweisen, was zu strukturierten Oberflächen führt.

Nach ihrer Härtung sind Klarlaclderungen auf der Basis von Zweikomponenten(2K)- oder Mehrkomponenten(3K, 4K)-Klarlacken zwar witterungsstabil, indes oftmals nicht genügend abriebfest. Mit aktinischer Strahlung härtbare Klarlacke weisen bei ihrer Härtung häufig einen starken Schrumpf auf, was zu einer Delaminierung aufgrund innerer Spannungen führt. Außerdem können sie nach ihrer Applikation auf komplexer geformte Substrate in den Schattenbereichen nur ungenügend ausgehärtet werden. Pulverslurry-Klarlacke sind mit einigen häufig angewandten Wasserbasislacken mehr oder weniger unverträglich, was zur Rißbildung (mud cracking) in der Mehrschichtlackierung und zur Delamination der Schichten führen kann.

Aus der deutschen Patentanmeldung DE 196 45 761 A 1 sind hydrophile selbstvernetzende Polyurethane bekannt, die olefinisch ungesättigte Gruppen und endständige blockierte Isocyanatgruppen enthalten. Die Blockierungsmittel werden indes hierin nicht näher spezifziert. Diese bekannten hydrophilen selbstvernetzenden Polyurethane werden zur Herstellung von Pfropfmischpolymerisaten nach der Emulsionspolymerisationsmethode verwendet. Die resultierenden Dispersionen der Pfropfmischpolymerisate werden zur Herstellung von Wasserbasislacken und nicht von Klarlacken verwendet. Die Herstellung farb- und/oder effektgebender Mehrschichtlackierungen nach dem Naß-in-naß-Verfahren, bei dem Basislackschichten mit Klarlackschichten überschichtet werden, wonach man beide Schichten gemeinsam härtet, wird in der Patentanmeldung nicht angesprochen. Ebensowenig wird die Kombination von thermischer Härtung und Härtung mit aktinischer Strahlung (Dual Cure) in der Patentanmeldung beschrieben.

Aus dem deutschen Patent DE 197 22 862 C 1 ist ein fremdverneizendes Pfropfmischpolymerisat bekannt, das erhältlich ist, indem man in einer Dispersion eines olefinisch ungesättigten, hydrophile funktionelle Gruppen aufweisenden Polyurethans mit im statistischen Mittel 0,05 bis 1,1 polymerisierbaren seitenständigen und/oder endständigen Doppelbindungen pro Molekül olefinisch ungesättigte Monomere polymerisiert. Die bekannten fremdvernetzenden Pfropfmischpolymerisate der DE 197 22 862 C 1 liegen als Primärdispersionen vor und sind sehr gut für die Herstellung wäßriger fremdvemetzender Beschichlungsstoffe, insbesondere Wasserbasislacke, geeignet. Als Vernetzungsmittel können sie blockierte Isocyanate enthalten. Die fremdvemetzenden Wasserbasislacke können mit Vorteil für die Herstellung farb- und/oder effektgebender Mehrschichtlackierungen nach dem Naß-in-naß-Verfahren verwendet werden. Das Patent beschreibt jedoch nicht die Verwendung der Primärdispersionen für die Herstellung von Klarlacken, die thermisch und mit aktinischer Strahlung gehärtet werden können.

Im Rahmen der vorliegenden Erfindung bezeichnet der Begriff "selbstvernetzend" die Eigenschaft eines Bindemittels (zu dem Begriff vgl. Römpp Lexikon Lacke und Druckfarben, Georg Thieme Verlag, Stuttgart, New York, 1998, »Bindemittel«, Seiten 73 und 74), mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind. Als fremdvernetzend werden dagegen solche Beschichtungsstoffe bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

In der nicht vorveröffentlichten deutschen Patentanmeldung DE 199 47 045.5 wird ein thermisch und mit aktinischer Strahlung härtbarer Klarlack auf der Basis einer wäßrigen Dispersion beschrieben, die Hydroxylgrupppen, blockierte Isocyanatgruppen und olefinisch ungesättigte Gruppen sowie dispergierende ionische Gruppen enthält. Die Verwendung dieser Klarlacke im Rahmen des Naß-in-Naß-Verfahrens wird hierin nicht beschrieben.

In der nicht vorveröffentlichten deutschen Patentanmeldung DE 199 58 726.4 wird eine thermisch und mit aktinischer Strahlung härtbare Pulverslurry beschrieben, die mindestens eine wäßrigen Dispersion enthält. Die Dispersion wird aus aliphatischen Polyisocyanaten, Verbindungen mit isocyanatreaktiven funktionellen Gruppen sowie mit aktinischer Strahlung aktivierbaren Bindungen, niedermolekularen aliphatischen Verbindungen mit isocyanatreaktiven funktionellen Gruppen, Verbindungen mit isocyanatreaktiven funktionellen Gruppen und dispergierenden funktionellen Gruppen, Neutralisationsmittel für die dispergierenden funktionellen Gruppen sowie Blockierungsmitteln für Isocyanatgruppen und/oder Verbindungen mit blockierten Isocyanatgruppen hergestellt, wobei die blockierten Isocyanatgruppen über die Umsetzung der Blockierungsmittel mit isocyanatgruppenhaltigen Polyurethanpräpolymeren in die Dispersion eingeführt werden. Die Verwendung von Carbamatgruppen wird in dieser Patentanmeldung nicht beschrieben.

In der nicht vorveröffentlichten deutschen Patentanmeldung DE 199 08 013.5 wird eine strukturviskose, mit aktinischer Strahlung und gegebenenfalls thermisch härtbare Pulverslurry beschrieben, welche feste sphärische Partikel einer mittleren Teilchengröße von 0,8 bis 20 µm und einer maximalen Teilchengröße von 30 µm enthält, wobei die Pulverklarlack-Slurry einen Gehalt an Ionen bildenden dispergierenden Gruppen von 0,05 bis 1 meq/g, entsprechend einer mittleren Säurezahl oder Amin-Zahl von 3 bis 56 g KOH/g Festkörper (MEQ-Säure oder - Amin von 0,05 bis 1,0 meq/g Festkörper), vorzugsweise bis 28 (MEQ-Säure oder -Amin: 0,5) und insbesondere bis 17 (MEQ-Säure oder-Amin: 0,3), einen Gehalt an Neutralisationsmitteln von 0,05 bis 1 meq/g und eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹ aufweist. Darüber hinaus kann die Pulverklarlack-Slurry Bindemittel mit reaktiven funktionellen Gruppen wie beispielsweise Hydroxylgruppen enthalten, die mit Vemetzungsmitteln wie blockierten Isocyanaten thermische Vernetzungsreaktionen eingehen können. Die Verwendung von Carbamatgruppen wie -O-C(O)-NH₂ wird in der Patentanmeldung nicht beschrieben.

In der nicht vorveröffentlichten deutschen Patentanmeldung DE 199 08 018.6 wird eine Dual Cure-Pulverklarlack-Slurry beschrieben, die Bestandteile enthält, die sowohl mit aktinischer Strahlung aktivierbare Gruppen (A) als auch komplementäre reaktive funktionelle Gruppen (B), die thermische Vernetzungsreaktionen eingehen, enthalten. Carbamatgruppen wie -O-C(O)-NH₂ werden nicht als Gruppen (B) verwendet.

In der nicht vorveröffentlichten deutschen Patentanmeldung DE 199 61 926.3 werden thermisch und mit aktinischer Strahlung härtbare Stoffgemische bechrieben, die auch zur Herstellung von Pulverslurry-Lacken verwendet werden können. Die Stoffgemische enthalten einen Bestandteil (A), der aus einem Polyisocyanat, einer Verbindung, die mindestens eine mit aktinischer Strahlung aktivierbare Bindung und eine isocyanatreaktive funktionelle Gruppe enthält, und mindestens einer Verbindung, die mindestens eine Carbamatgruppe und eine isocyanatreaktive funktionelle Gruppe enthält, herstellbar ist. Der Bestandteil (A) kann hydrophile Gruppen wie Poly(ethylenoxid)monoalkylether enthalten. Die Verwendung von potentiellen anionischen funktionellen Gruppen als dispergierende Gruppen und von Neutralisationsmittel hierfür wird in der Patentanmeldung nicht beschrieben. Außerdem enthalten die Bestandteile (A) keine isocyanatreaktiven funktionellen Gruppen wie Hydroxylgruppen.

In der nicht vorveröffentlichten deutschen Patentanmeldung DE 100 27 292.4 werden Dual Cure-Pulverslurryklarlacke beschrieben, die als Bindemittel zahlreiche unterschiedliche Polymere, unter anderem auch Polyurethane, enthalten. Die Bindemittel können zahlreiche unterschiedliche komplementäre reaktive funktionelle Gruppen, die thermische Vernetzung Reaktionen eingehen, enthalten, unter anderem auch isocyanatreaktive funktionelle Gruppen und Carbamatgruppen -O-C(O)-NH₂. Als Vernetzungsmittel können Aminoplastharze verwendet werden. Einzelheiten betreffend die Herstellung einer wäßrigen Dispersion eines Polyurethans, enthaltend mit aktinischer Strahlung aktivierbare fimktionelle Gruppen, isocyanatreaktive funktionelle Gruppen, dispergierende funktionelle Gruppen wie Carboxylgruppen und Carbamatgruppen, werden nicht angegeben. Sofern im Rahmen der Patentanmeldung Carboxylgruppen angewandt werden, dienen sie der thermische Vernetzung mit Epoxidgruppen als komplementären reaktiven funktionellen Gruppen.

Aufgabe der vorliegenden Erfindung ist es, eine neue wäßrige Dispersion zu finden, die die Herstellung neuer thermisch und mit aktinischer Strahlung härtbarer Beschichtungsstoffe gestattet. Insbesondere sollen die Beschichtungsstoffe als Pulverslurryklarlacke anwendbar sein.

Außerdem soll die neue wäßrige Dispersion auch für die Herstellung von Klebstoffen und Dichtungsmassen geeignet sein.

Die Beschichtungsstoffe, Klebstoffe und Dichtungsmassen auf der Basis der neuen wäßrigen Dispersion sollen Beschichtungen, Klebstoffe und Dichtungen liefern, die eine vorzügliche Witterungsbeständigkeit, Chemikalienbeständigkeit, Härte, Flexibilität und Kratzfestigkeit aufweisen und nicht zum Vergilben neigen.

Außerdem war es die Aufgabe der vorliegenden Erfindung, ein neues Verfahren zur Herstellung von wäßrigen Dispersion zu finden.

Des weiteren war es die Aufgabe der vorliegenden Erfindung, ein neues Verfahren zur Herstellung farb- und/oder effektgebender Mehrschichtlackierungen bereitzustellen, das die Nachteile des Standes der Technik nicht mehr länger aufweist, sondern sicher und zuverlässig Mehrschichtlackierungen liefert, die, was Farbe, Effekt, Glanz und D.O.I. (distinctiveness of the reflected image) betrifft, von höchster optischer Qualität sind, eine glatte, strukturfreie, harte, flexible und kratzfeste Oberfläche haben, witterungs-, chemikalien- und etch-beständig sind, nicht vergilben und keine Rißbildung und Delamination der Schichten zeigen.

Demgemäß wurde die neue wäßrige Dispersion gefunden, die mindestens ein Polymer mit im statistischen Mittel
(i) mindestens einer primären und/oder sekundären Carbamatgruppe,
(ii) mindestens einer funktionellen Gruppe mit mindestens einer mit aktinischer Strahlung aktivierbaren Bindung und
(iii) mindestens einer dispergierenden ionischen funktionellen Gruppe
enthält und im folgenden als "erfindungsgemäße Dispersion" bezeichnet wird.

Des weiteren wurden die neuen Beschichtungsstoffe, Klebstoffe und Dichtungsmassen gefunden, die die erfindungsgemäßen Dispersionen und/oder die mit Hilfe des erfindungsgemäßen Herstellverfahrens erhaltenen Polyurethandispersionen enthalten und im folgenden als "erfindungsgemäße Beschichtungsstoffe, Klebstoffe und Dichtungsmassen" bezeichnet werden.

Weitere erfindungsgemäße Gegenstände gehen aus der Beschreibung hervor.

Im Hinblick auf den Stand der Technik war es überraschend und für den Fachmann nicht vorhersehbar, daß die Aufgabe, die der vorliegenden Erfindung zugrunde lag, mit Hilfe der erfiuadungsgemäße. Dispersion gelöst werden konnte. Insbesondere überraschte, daß die erfindungsgemäße Dispersion so außerordentlich breit anwendbar war und die Herstellung von Beschichtungsstoffen, Klebstoffen und Dichtungsmassen gestattete, die auch auf komplex geformten Substraten vollständig zu Beschichtungen, Klebschichten und Dichtungen ausgehärtet werden konnten, die hochkratzfest und chemikalienbeständig waren und nicht zum Vergilben neigten. Besonders hervorzuheben ist, daß mit Hilfe der erfindungsgemäßen Dispersion Mehrschichtlackierungen ausschließlich auf der Basis von wäßrigen Lacken hergestellt werden konnten.

Die erfindungsgemäße Dispersion enthält mindestens ein Polymer.

Der Gehalt der erfindungsgemäßen Dispersion an dem Polymeren kann sehr breit variieren. Vorzugsweise liegt er bei 10 bis 70, bevorzugt 12 bis 68, besonders bevorzugt 13 bis 66, ganz besonders bevorzugt 14 bis 64 und insbesondere 15 bis 62 Gew.%, jeweils bezogen auf die erfindungsgemäße Dispersion.

Das Polymer enthält im statistischen Mittel mindestens eine primäre und/oder sekundäre Carbamatgruppe der allgemeinen Formel I

-O-C(O)-NHR (I),

worin die Variable R für ein Wasserstoffatom oder einen organischen Rest steht. Beispiele geeigneter organischer Reste sind Alkylgruppen mit 1 bis 18 Kohlenstoffatomen, Cycloalkylgruppen mit 3 bis 12 Kohlenstoffatomen, Arylgruppen mit 6 bis 20 Kohlenstoffatomen sowie Arylalkylgruppen mit 6 bis 30 Kohlenstoffatomen. Vorzugsweise werden primäre Carbamatgruppen verwendet.

Erfindungsgemäß ist es von Vorteil, wenn das Polymer im statistischen Mittel mehr als eine, bevorzugt mehr als zwei, besonders bevorzugt mehr als drei, ganz besonders bevorzugt mehr als vier und insbesondere mehr als fünf Carbamatgruppen der allgemeinen Formel I enthält.

Das Polymer enthält im statistischen Mittel mindestens eine funktionelle Gruppen mit mindestens einer mit aktinischer Strahlung aktivierbaren Bindung.

Im Rahmen der vorliegenden Erfindung ist unter aktinischer Strahlung elektromagnetische Strahlung wie nahes Infrarot (NIR), sichtbares Licht, UV-Strahlung oder Röntgenstrahlung, insbesondere UV-Strahlung, oder Korpuskularstrahlung wie Elektronenstrahlung zu verstehen.

Unter einer mit aktinischer Strahlung aktivierbaren Bindung wird eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Besonders gut geeignete Doppelbindungen sind beispielsweise in (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen enthalten. Von diesen bieten die Acrylatgruppen ganz besondere Vorteile, weswegen sie erfindungsgemäß ganz besonders bevorzugt verwendet werden.

Erfindungsgemäß ist es von Vorteil, wenn das Polymer im statistischen Mittel mehr als eine, bevorzugt mehr als zwei, besonders bevorzugt mehr als drei, ganz besonders bevorzugt mehr als vier und insbesondere mehr als fünf der vorstehend beschriebenen mit aktinischer Strahlung aktivierbaren funktionellen Gruppen enthält.

Das Polymer enthält im statistischen Mittel mindestens eine dispergierende (potentiell) ionische funktionelle Gruppe. Beispiele geeigneter (potentiell) kationischer Gruppen sind Aminogruppen. Beispiele geeigneter (potentiell) anionischer Gruppen sind Carbonsäure-, Sulfonsäure- oder Phosphonsäuregruppen, insbesondere Carbonsäuregruppen. Sie sind in der erfindungsgemäß zu verwendenden Dispersion in einer Menge vorhanden, daß, bezogen auf den Festkörper der erfindungsgemäßen Dispersion, eine Säurezahl oder Aminzahl von 3,0 bis 100, vorzugsweise 4,0 bis 90, bevorzugt 5,0 bis 80, besonders bevorzugt 6,0 bis 70, ganz besonders bevorzugt 6,0 bis 60 und insbesondere 6 bis 50 mg KOH/g resultiert. Hierbei sind dispergierende (potentiell) anionische funktionelle Gruppen von Vorteil.

Das Polymer kann im statistischen Mittel mindestens eine isocyanatreaktive funktionelle Gruppe enthalten. Beispiele geeigneter isocyanatreaktiver funktioneller Gruppen sind Thiol-, Hydroxyl- und/oder primäre und/oder sekundäre Aminogruppen, insbesondere Hydroxylgruppen. Dabei kann es von Vorteil sein, wenn das Polymer im statistischen Mittel mehr als eine, bevorzugt mehr als zwei, besonders bevorzugt mehr als drei, ganz besonders bevorzugt mehr als vier und insbesondere mehr als fünf isocyanatreaktive funktionelle Gruppen enthält.

Beispiele geeigneter Polymere sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele gut geeigneter Polymere sind lineare und/oder verzweigte und/oder blockartig, kammartig und/oder statistisch aufgebaute Poly(meth)acrylate oder Acrylatcopolymerisate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, insbesondere aber Polyurethane.

Die Polymere werden mit Hilfe üblicher und bekannter Methoden aus geeigneten Ausgangsverbindungen hergestellt, die (i) primäre und/oder sekundäre Carbamatgruppen und/oder in Carbamatgruppen überfiihrbare Gruppen, (ii) funktionelle Gruppen mit mindestens einer mit aktinischer Strahlung aktivierbaren Bindung und/oder (iii) dispergierende (potentiell) ionische funktionelle Gruppe sowie gegebenenfalls (iv) isocyanatreaktive funktionelle Gruppen enthalten. Oder aber die betreffenden Gruppen können durch polymeranaloge Reaktionen in die Grundstrukturen der Polymere eingeführt werden. Die resultierenden Polymere werden dann in Wasser oder einem wäßrigen Medium dispergiert (Sekundärdispersion), sofern sie nicht in Wasser oder einem wäßrigen Medium hergestellt worden sind (Primärdispersion).

Besonders vorteilhafte erfindungsgemäße Dispersionen sind Polyurethandispersionen.

Ganz besonders vorteilhafte erfindungsgemäße Dispersionen enthalten mindestens ein Polyurethan, daß herstellbar ist, indem man in erfindungsgemäßer Verfahrensweise
(A) mindestens ein aliphatisches Polyisocyanat mit einer Isocyanatfunktionalität von 2,0 bis 6,0 mit
(B) mindestens einer Verbindung mit mindestens einer isocyanatreaktiven funktionellen Gruppe sowie mindestens einer mit aktinischer Strahlung aktivierbaren Bindung,
(C) mindestens einer niedermolekularen aliphatischen Verbindung mit mindestens zwei isocyanatreaktiven funktionellen Gruppen,
(D) mindestens einer Verbindung mit mindestens einer isocyanatreaktiven funktionellen Gruppe und mindestens einer dispergierenden (potentiell) ionischen, insbesondere anionischen, funktionellen Gruppe,
(E) mindestens einem Neutralisationsmittel für die dispergierenden funktionellen Gruppen der Verbindung (D) und
(F) mindestens einer Verbindung mit mindestens einer primären und/oder sekundären Carbamatgruppe und/oder mindestens einer funktionellen Gruppe, die in eine Carbamatgruppen überführt werden kann, und mindestens einer isocyanatreaktiven Gruppe sowie gegebenenfalls
(G) mindestens einer von den Verbindungen (B) bis (F) verschiedenen Verbindung mit einer isocyanatreaktiven funktionellen Gruppe
umsetzt.

Das aliphatische, inklusive cycloaliphatische, Polyisocyanat (A) hat eine Isocyanatfunktionalität von 2, 0 bis 6,0, vorzugsweise 2,0 bis 5,0, bevorzugt 2,0 bis 4,5 und insbesondere 2,0 bis 3,5. Im Rahmen der vorliegenden Erfindung bezeichnet der Begriff "cycloaliphatisches Diisocyanat" ein Diisocyanat, worin mindestens eine Isocyanatgruppe an einen cycloaliphatischen Rest gebunden ist.

Beispiele geeigneter cycloaliphatischer Polyisocyanate A) mit einer Isocyanatfunktionalität von 2,0 sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Düsocyanatocyclopentan, 1,3-Diisocyanatocyclopentan, 1,2-Düsocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat, insbesondere Isophorondiisocyanat.

Beispiele geeigneter erfindungsgemäß zu verwendender acyclischer aliphatischer Düsocyanate sind Trunethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isoeyanatononyl)-1-pentyl-cyclohexan, oder 1,2-, 1,4- oder 1,3-Bis(isoeyanatomethyl)cyclohexan, 1,2-, 1,4- oder 1,3-Bis(2-isocyanatoeth-1-yl)cyclohexan,1,3-Bis(3-isocyanatoprop-1-yl)cyclohexan oder 1,2-,1,4- oder 1,3-Bis(4-isocyanatobut-1-yl)cyclohexan.

Von diesen ist Hexamethylendiisocyanat von besonderem Vorteil und wird deshalb erfindungsgemäß ganz besonders bevorzugt verwendet.

Beispiele geeigneter Polyisocyanate (A) mit einer Isocyanatfunktionalität >2 sind Polyisocyanate, insbesondere auf der Basis von Hexamethylendiisocyanat, die Isocyanurat-, Biuret-, Allophanat-, Iminooxadiazindion-, Urethan-, Harnstoff- Carbodiimid und/oder Uretdiongruppen aufweisen und die in üblicher und bekannter Weise aus den vorstehend beschriebenen Diisocyanaten erhältlich sind. Hiervon sind die allophanatgruppenhaltigen und/oder isocyanuratgruppenhaltigen Polyisocyanate (A), insbesondere diejenigen auf der Basis von Hexamethylendüsocyanat, von Vorteil und werden deshalb erfindungsgemäß besonders bevorzugt verwendet. Beispiel geeigneter Herstellungsverfahren und Polyisocyanate sind beispielsweise aus dem Patentschriften CA 2,163,591 A, US 4,419,513 A, US 4,454,317 A, EP 0 646 608 A 1, US 4,801,675 A, EP 0 183 976 A 1, DE 40 15 155 A 1, EP 0 303 150 A 1, EP 0 496 208 A 1, EP 0 524 500 A 1, EP 0 566 037 A 1, US 5,258,482 A, US 5,290,902 A, EP 0 649 806 A 1, DE 42 29 183 A 1oder EP 0 531 820 A 1 bekannt.

Beispiele geeigneter Verbindungen (B) mit mindestens einer, insbesondere einer, funktionellen Gruppe sowie mindestens einer mit aktinischer Strahlung aktivierbaren Bindung pro Molekül sind
- Allylalkohol oder 4-Butylvinylether;
- Hydroxyalkylester und Hydroxycycloalkylester der Acrylsäure oder der Methacrylsäure, insbesondere der Acrylsäure, die durch Veresterung aliphatischer Diole, beispielsweise der vorstehend beschriebenen niedermolekularen Diole B), mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxymethyl)cyclohexanacrylat oder -methacrylat; von diesen sind 2-Hydroxyethylacrylat und 4-Hydroxybutylacrylat besonders vorteilhaft und werden deshalb erfindungsgemäß besonders bevorzugt verwendet; oder
- Umsetzungsprodukte aus cyclischen Estern, wie z.B. epsilon-Caprolacton, und diesen Hydroxyalkyl- oder-cycloalkylestern.

Beispiele geeigneter niedermolekularer aliphatischer Verbindungen (C) mit mindestens zwei, insbesondere zwei, isocyanatreaktiven funktionellen Gruppen sind Polyole, insbesondere Diole, Polyamine, insbesondere Diamine, und Aminoalkohole. Üblicherweise werden die Polyole und/oder Polyamine neben den Diolen und/oder Diaminen in untergeordneten Mengen verwendet, um Verzweigungen in die Polyurethane einzuführen. Im Rahmen der vorliegenden Erfindung sind unter untergeordneten Mengen Mengen zu verstehen, die kein Gelieren der Polyurethane bei ihrer Herstellung bewirken. Für die Aminoalkohole gilt dies sinngemäß

Beispiele geeigneter Diole (C) sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclöhexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpmpandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropancliol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, Dihydroxymethylcyclohexan, Bis(hydroxycyclohexyl)propan, Tetramethylcyclobutandiol, Cyclooctandiol oder Norbonandiol, insbesondere 1,2-, 1,3- und/oder 1,4-Cyclohexandimethanol, die im folgenden zusammenfassend als Cyclohexandimethanol bezeichnet werden.

Beispiele geeigneter Polyole (C) sind Trimethylolethan, Trimethylolpropan oder Glycerin, Pentaerythrit oder Homopentaerythrit oder Zuckeralkohole wie Threit oder Erythrit oder Pentite wie Arabit, Adonit oder Xylit oder Hexite wie Sorbit, Mannit oder Dulcit.

Beispiele geeigneter Diamine (C) sind Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamdn, Isophorondiamin oder 4,4'-Diaminodicyclohexylmethan.

Beispiele geeigneter Polyamine (C) sind Diethylentriamin, Tnethylentetramin, Dipropylendiamin und Dibutylentriamin.

Beispiele geeigneter Aminoalkohole (C) sind Ethanolamin, Diethanolamin oder Triethanolamin.

Von diesen Verbindungen (C) bietet Cyclohexandimethanol besondere Vorteile und wird deshalb erfindungsgemäß bevorzugt verwendet.

Beispiele geeigneter Verbindungen (D) mit mindestens einer isocyanatreaktiven funktionellen Gruppe und mindestens einer dispergierenden funktionellen Gruppe, insbesondere einer (potentiell) anionischen Gruppe, sind Mercapto-, Hydroxy -, Amino-oder Iminobcarbonsäuren, -phosphonsäuren oder -sulfonsäuren wie Mercaptoessigsäure (Thioglykolsäure), Mercaptopropionsäure, Mercaptobernsteinsäure, Hydroxyessigsäure, Hydroxydecansäure, Hydroxydodecansäure, 12-Hydroxystearinsäure, Hydroxyethansulfonsäure, Hydroxypropansulfonsäure, Mercaptoethansulfonsäure, Mercaptopropansulfonsäure, Aminopropansulfonsäure, Glycin, Iminodiessigsäure, 2,2-Dimethylolessigsäure, 2,2-Dimethylolpropionsäure, 2,2-Dimethylolbuttersäure, 2,2-Dimenthylolpentansäure, ###,###-Diaminovaleriansäure, 3,4-Diaminobenzoesäure, 2,4-Diaminotoluolsulfonsäure oder 2,4-Diamino-diphenylethersulfonsäure, insbesondere HydroxyessigsäureS. Sie werden in Mengen verwendet, daß die vorstehend beschriebenen Säurezahlen resultieren.

Beispiele für geeignete Neutralisationsmittel (E) für die potentiell anionischen Gruppen der Verbindung (D) sind Alkali- und Erdalkalihydroxide, -oxide, - carbonate, oder -hydrogencarbonate sowie Ammoniak oder organische primäre, sekundäre und/oder tertiäre Amine, wie z.B. Monoethanolamin, Diethanolamin, Diethylamin, Monoisopropanolamin, Diisopropanolamin, Morpholin, 2-Amino-2-methyl-1-propanol, Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin und/oder Dimethylisopropanolamin.

Beispiele geeigneter Verbindungen (F) mit mindestens einer, insbesondere einer Carbamatgruppe und/oder mmdestens einer, insbesondere einer, in Carbamatgruppen überführbaren funktionellen Gruppe sind Hydroxyethylcarbamat oder Hydroxypropylcarbamat, insbesondere Hydroxypropylcarbamat. Ein Beispiel für eine geeignete in eine Carbamatgruppe umwandelbare funktionelle Gruppe ist die cyclische Ethylencarbonatgruppe, die mit Ammoniak in eine primäre Carbamatgruppe umgewandelt werden kann. Die Ethylencarbonatgruppe selbst kann durch die Umsetzung des Polyisocyanats, der Polysäure oder des Polyepoxids mit beispielsweise Glycidol und anschließender Umsetzung der Epoxidgruppen mit Kohlendioxid hergestellt werden. Im Falle der Polyepoxide ist darauf zu achten, daß bei der Umsetzung mit Kohlendioxid keine an den Grundkörper gebundene Epoxidgruppen mehr vorhanden sind.

Beispiele geeigneter Verbindungen (G), die von den Verbindungen (B) bis (F) verschieden sind und eine isocyanatreaktive funktionelle Gruppe aufweisen, sind Alkohole oder Monoamine (C) wie Ethanol, Propanol, n-Butanol, sec.-Butanol, tert.-Butanol, Amylalkohole, Hexanole, Fettalkohole, Phenol, Allylalkohol oder Ethylhexylamin. Sie werden vorzugsweise i. V. m. höherfunktionellen Verbindungen (C) verwendet, insbesondere um das Gelieren der Polyurethane bei ihrer Herstellung zu vermeiden.

Die Herstellung des erfindungsgemäß zu verwendenden Polyurethans kann insbesondere über den Gehalt der dispergierenden ionischen funktionellen Gruppen und deren Neutralisationsgrad so gesteuert werden, daß in den wäßrigen Dispersionen das gesamte Spektrum der Solvatation zwischen molekulardisperser Lösung der Polyurethane und stabilisierten Pulverslurrypartikeln vorliegt.

Vorzugsweise weisen diese festen feinteiligen Partikel eine mittlere Teilchengröße von 3,0 bis 10 µm, insbesondere 3,0 bis 5 µm, auf.

Methodisch gesehen weist die Herstellung der erfindungsgemäBen Polyurethandispersion aus den vorstehend beschriebenen Ausgangsprodukten keine Besonderheiten auf, sondern erfolgt nach den üblichen und bekannten Methoden der Herstellung wäßriger Polyurethandispersionen, wie sie beispielsweise in den eingangs genannten, die Wasserbasislacke betreffenden Patentschriften beschrieben werden.

Erfindungsgemäß ist es von Vorteil, das erfindungsgemäße Polyurethan mit Hilfe des erfindungsgemäßen Herstellverfahrens zu synthetisieren.

So wird beispielsweise in einer bevorzugten Variante des erfindungsgemäßen Herstellverfahrens in einem ersten Verfahrenschritt mindestens eine Verbindung (B) mit einem molaren Überschuß mindestens einer Verbindung (A) zu einem Addukt umgesetzt, das mit aktinischer Strahlung aktivierbare Bindungen und freie Isocyanatgruppen enthält. Das Addukt wird in einem zweiten Verfahrenschritt mit mindestens einer Verbindung (D) sowie gegebenenfalls (C) zu einem Isocyanatgruppen enthaltenden Präpolymeren umgesetzt In einem weiteren Verfahrenschritt wird mindestens ein Neutralisationsmittel (E) sowie gegebenenfalls mindestens eine Verbindung (C) zugesetzt, so daß ein partiell oder vollständig neutralisiertes Präpolymer resultiert. Das neutralisierte Präpolymer wird in einem vierten Verfahrenschritt mit einer Verbindung (F) umgesetzt. Sollten hiernach noch freie Isocyanatgruppen vorliegen, werden diese vorzugsweise mit mindestens einer Verbindungen (G) und/oder (C) umgesetzt, wodurch das erfindungsgemäß zu verwendende Polyurethan resultiert. Zusätzlich zu den Verbindungen (G) und/oder (C) können die aus der US-Patentschrift US 4,444,954 A bekannten Blockierungsmittel verwendet werden. In einer weiteren Variante des erfindungsgemäßen Herstellverfahrens können die Ausgangsprodukte in einem Eintopfverfahren miteinander umgesetzt werden.

Das erfindungsgemäße Polyurethan wird anschließend in ein wäßriges Medium überführt, wodurch die erfindungsgemäße Polyurethandispersion resultiert.

Das wäßrige Medium enthält im wesentlichen Wasser. Hierbei kann das wäßrige Medium in untergeordneten Mengen organische Lösemittel, mit aktinischer Strahlung härtbare Reaktivverdünner, Photoinitiatoren, Initiatoren der radikalischen Polymerisation und/oder sonstige lackübliche Additive und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Die resultierende erfindungsgemäße Dsipersion kann im eingangs genannten Sinne selbstvemetzend sein.

Die erfindungsgemäße Dispersion dient der Herstellung der erfindungsgemäßen Beschichtungsstoffe, Klebstoffe und Dichtungsmassen.

Besondere Vorteile resultieren, wenn die erfindungsgemäße Polyurethandispersion für die Herstellung der erfindungsgemäßen Beschichtungsstoffe verwendet wird. Die nachstehenden Ausführung gelten indes für die erfindungsgemäßen Klebstoffe und Dichtungsmassen sinngemäß.

Bei den erfindungsgemäßen Beschichtungsstoffen kann es sich um pigmentierte oder nicht pigmentierte Beschichtungsstoffe handeln. Beispiele für pigmentierte Beschichtungsstoffe sind Füller, Wasserbasislacke oder Unidecklacke. Beispiele für nicht pigmentierte Beschichtungsstoffe sind Klarlacke, insbesondere Pulverslurryklarlacke.

Der Gehalt der erfindungsgemäßen Beschichtungsstoffe an der erfindungsgemäßen Dispersion kann breit variieren und richtet sich richtet sich vor allem nach dem Verwendungszweck, dem Gehalt der erfindungsgemäßen Dispersion an Polymeren und nach den sonstigen vorhandenen Bestandteilen, insbesondere danach, ob ein Vernetzungsmittel verwendet wird oder nicht. Vorzugsweise liegt der Gehalt bei 10 bis 100, bevorzugt 20 bis 99, besonders bevorzugt 30 bis 99, ganz besonders bevorzugt 40 bis 99 und insbesondere 50 bis 99 Gew.-%, jeweils bezogen auf die Gesamtmenge des Beschichtungsstoffs.

Vorzugsweise enthalten die erfindungsgemäßen Beschichtungsstoffe mindestens ein Vernetzungsmittel, das pro Molekül im statistischen Mittel mindestens eine carbamatreaktive funktionelle Gruppe sowie gegebenenfalls mindestens eine der vorstehend beschriebenen mit aktinischer Strahlung aktivierbaren Bindungen aufweist.

Beispiele geeigneter carbamatreaktiver funktioneller Gruppen sind N-Methylol- oder N-Methylolethergruppen.

Vorzugsweise werden Aminoplastharze verwendet. Beispiele gut geeigneter Aminoplastharze sind Melaminharze, Guanaminharze oder Harnstoffharze. Hierbei kann jedes für transparente Decklacke oder Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4 710 542 A und EP 0 245 700 B 1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Der Anteil des Vernetzungsmittel an dem erfindungsgemäßen Beschichtungsstoff kann breit variieren und richtet sich vor allem nach seiner Funktionalität, dem Verwendungszweck und nach den sonstigen vorhandenen Bestandteilen. Vorzugsweise liegt der Anteil des Vernetzungsmittel bei 0,1 bis 90, bevorzugt 0,5 bis 80, besonders bevorzugt 0,8 bis 70, ganz besonders bevorzugt 1,0 bis 60 und insbesondere 1,5 bis 50 Gew.-%, jeweils bezogen auf die Gesamtmenge des Beschichtungsstoffs.

Der erfindungsgemäße Beschichtungsstoff kann desweiteren mindestens einen Zusatzstoff enthalten.

Die Auswahl richtet sich vor allem nach dem Verwendungszweck des erfindungsgemäßen Dual-Cure-Stoffgemischs. Vorzugsweise sind diese Zusatzstoffe unter den Verarbeitungs- und Applikationsbedingungen des erfindungsgemäßen Beschichtungsstoffs nicht flüchtig und werden durch Wasser nicht zersetzt.

Wird der erfindungsgemäße Beschichtungsstoff als Füller, Decklack oder Basislack verwendet, enthält er als Zusatzstoffe farb- und/oder effektgebende Pigmente in üblichen und bekannten Mengen. Die Pigmente können aus anorganischen oder organischen Verbindungen bestehen und können effekt- und/oder farbgebend sein. Der erfindungsgemäße Dual-Cure-Beschichtungsstoff gewährleistet daher aufgrund dieser Vielzahl geeigneter Pigmente eine universelle Einsatzbreite der Dual-Cure-Beschichtungsstoffe und ermöglicht die Realisierung einer Vielzahl von Farbtönen und optischer Effekte.

Als Effektpigmente können Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Desweiteren kann der erfindungsgemäße Dual-Cure-Beschichtungsstoff, insbesondere als Füller, organische und anorganische Füllstoffe in üblichen und bekannten, wirksamen Mengen enthalten. Beispiele für geeignete Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Diese Pigmente und Füllstoffe können auch über Pigmentpasten in die erfindungsgemäßen Dual-Cure-Beschichtungsstoffe eingearbeitet werden.

Die vorstehend beschriebenen Pigmente und Füllstofffe entfallen, wenn die erfindungsgemäßen Beschichtungsstoffe in ihrem ganz besonders bevorzugten Verwendungszweck als Klarlacke verwendet werden.

Beispiele geeigneter Zusatzstoffe, welche sowohl in den erfindungsgemäßen Klarlacken, Füllern, Basislacken und Decklacken vorhanden sein können, sind
- übliche und bekannte oligomere und polymere Bindemittel wie thermisch härtbare lineare und/oder verzweigte und/oder blockartig, kammartig und/oder statistisch aufgebaute Poly(meth)acrylate oder Acrylatcopolymerisate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe;
- übliche und bekannte thermisch und/oder mit aktinischer Strahlung härtbare Reaktiverdünner wie stellungsisomere Diethyloctandiole oder Hydroxylgruppen enthaltende hyperverzweigte Verbindungen oder Dendrimere, di- oder höherfunktionelle (Meth)Acrylate wie Trimethylolpropan-tri(meth)acrylat, oder (Meth)Acrylatgruppen enthaltende Polyisocyanate;
- zusätzliche Vernetzungsmittel wie Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP 0 596 460 A 1beschrieben werden;
- niedrig siedende und/oder hochsiedende organische Lösemittel ("lange Lösemittel");
- UV-Absorber und/oder andere Lichtschutzmittel wie Benztriazole oder Oxalanilide oder Radikalfänger wie HALS-Verbindungen;
- Photoinitiatoren wie solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Katalysatoren für die Vernetzung wie Dibutylzinndilaurat, Lithiumdecanoat oder Zinkoctoat oder starke Säuren wie organische Sulfonsäuren, die gegebenenfalls mit Aminen blockiert sind;
- Entlüftungsmittel, wie Diazadicycloundecan;
- Slipadditive;
- Polymerisationsinhibitoren;
- Entschäumer;
- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen;
- rheologiesteuernde Additive, wie die aus den Patentschriften WO 94/22968, EP 0 276 501 A 1, EP 0 249 201 A 1 oder WO 97/12945 bekannten; vernetzte polymere Mikroteilchen, wie sie beispielsweise in der EP 0 008 127 A loffenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Mattierungsmittel wie Magnesiumstearat.

Weitere Beispiele geeigneter Zusatzstoffe werden in dem Lehrbuch »Lackadditive« von Johan Bieleman, Wiley-VCH, Weinheim, New York, 1998, beschrieben.

Die vorstehend beschriebenen Zusatzstoffe können auch in den erfindungsgemäßen -Klebstoffen und Dichtungsmassen vorhanden sein, sofern sie sich für diese Verwendungszwecke eignen, was der Fachmann anhand seines allgemeinen Fachwissens leicht feststellen kann.

Die Herstellung der erfindungsgemäßen Beschichtungsstoffe, Klebstoffe und Dichtungsmassen weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder nach den für die Herstellung der jeweiligen erfindungsgemäßen Beschichtungsstoffe, Klebstoffe und Dichtungsmassen geeigneten Verfahren.

Die erfindungsgemäßen Klebstoffe dienen der Herstellung der erfindungsgemäßen Klebschichten auf grundierten und ungrundierten Substraten.

Die erfindungsgemäßen Dichtungsmassen dienen der Herstellung der erfindungsgemäßen Dichtungen auf und/oder in grundierten und ungrundierten Substraten.

Die erfindungsgemäßen Beschichtungsstoffe dienen insbesondere der Herstellung ein- oder mehrschichtiger Klarlackierungen und/oder farb- und/oder effektgebender Mehrschichtlackierungen auf grundierten und ungrundierten Substraten. Die erfindungsgemäßen Beschichtungsstoffe erweisen sich bei diesen Verwendungen als besonders vorteilhaft. Ganz besondere Vorteile resultieren bei ihrer Verwendung zur Herstellung von Klarlaclderungen, insbesondere im Rahmen des sogenannten Naß-in-naß-Verfahrens, bei dem ein Basislack, insbesondere ein Wasserbasislack, auf das grundierte oder ungrundierte Substrat appliziert und getrocknet, indes nicht gehärtet wird, wonach man auf die Basislackschicht einen erfindungsgemäßen Klarlack, insbesondere einen erfindungsgemäßen Pulverslurryklarlack appliziert und die resultierende Klarlackschicht gemeinsam mit der Basislackschicht thermisch und mit aktinischer Strahlung härtet.

Als Substrate kommen alle zu lackierenden Oberflächen, die durch eine Härtung der hierauf befindlichen Schichten unter der kombinierten Anwendung von Hitze und aktinischer Strahlung nicht geschädigt werden, in Betracht.

Geeignete Subtrate bestehen aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien.

Demnach sind die erfindungsgemäßen Lackierungen, Klebschichten oder Dichtungen auch für Anwendungen außerhalb der Automobilerstlackierung und der Autoreparaturlackierung geeignet. Hierbei kommen sie insbesondere für die Lackierung, das Verkleben und/oder das Abdichten von Möbeln, Fenstern und Türen, von Bauwerken im Innen- und Außenbereich und für die industrielle Lackierung, inklusive Coil Coating, Container Coating und die Imprägnierung oder Beschichtung elektrotechnischer Bauteile, in Betracht. Im Rahmen der industriellen Lackierung eignen sie sich für die Lackierung, das Verkleben und/oder das Abdichten praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation der erfindungsgemäßen Beschichtungsstoffe, Klebstoffe und Dichtungsmassen, insbesondere der erfindungsgemäßen Beschichtungsstoffe, kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Die Applikationen kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Bevorzugt wird die Applikation bei Beleuchtung mit sichtbarem Licht einer Wellenlänge von über 550 nm oder unter Lichtausschluß durchgeführt. Hierdurch werden eine stoffliche Änderung oder Schädigung des erfindungsgemäßen Beschichtungsstoffs und des Overspray vermieden.

Im allgmeinen werden die Füllerlackschicht, Decklackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 15 bis 120, besonders bevorzugt 20 bis 100 und insbesondere 25 bis 90 µm, im Falle der Decklackierung liegt sie bei 5 bis 90, vorzugsweise 10 bis 80, besonders bevorzugt 15 bis 60 und insbesondere 20 bis 50 µm, im Falle der Basislackierung liegt sie bei 5 bis 50, vorzugsweise 10 bis 40, besonders bevorzugt 12 bis 30 und insbesondere 15 bis 25 µm, und im Falle der Klarlackierungen liegt sie bei 10 bis 100, vorzugsweise 15 bis 80, besonders bevorzugt 20 bis 70 und insbesondere 25 bis 60 µm.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der applizierten Schichten oder zum Verdunsten von flüchtigen Bestandteilen wie Lösemittel oder Wasser. Die Ruhezeit kann durch die Anwendung erhöhter Temperaturen bis 80°C unterstützt und/oder verkürzt werden, sofern hierbei keine Schädigungen oder Veränderungen der applizierten Schichten eintreten, etwa eine vorzeitige vollständige Vernetzung.

Erfindungsgemäß erfolgt die Aushärtung mit aktinischer Strahlung, insbesondere mit UV-Strahlung, und/oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der applizierten Schichten gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei einer Temperatur >90 °C, bevorzugt 90 bis 180 °C, besonders bevorzugt 110 bis 160°C und insbesondere 120 bis 150 °C während einer Zeit von 1 min bis zu 2 h, besonders bevorzugt 2 min bis zu 1 h und insbesondere 3 min bis 30 min.

Thermische Härtung und Härtung mit aktinischer Strahlung können gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härhmgsmethode, welche für den jeweiligen Einzelfall am vorteilhaftesten ist aufgrund seines allgemeinen Fachwissens gegebenenfalls unter Zuhilfenahme einfacher Vorversuche ermitteln.

Die aus den erfindungsgemäßen Dual-Cure-Klebstoffen und -Dichtungsmassen hergestellten erfindungsgemäßen Klebschichten und Dichtungen haben auch unter extremen und/oder rasch wechselnden klimatischen Bedingungen eine hervorragende Klebkraft und Dichtungsfähigkeit auch über lange Zeiträume hinweg.

Die aus den erfindungsgemäßen Beschichtungsstoffen hergestellten erfindungsgemäßen Bescbichtungen weisen einen hervorragenden Verlauf und einen hervorragenden optischen Gesamteindruck auf Sie sind witterungsstabil und vergilben auch im tropischen Klima nicht Sie sind daher im Innen- und Außenbereich verwendbar.

Die mit Hilfe des erfindungsgemäßen Beschichtungsverfahrens hergestellten farb- und/oder effektgebenden Mehrschichtlackierungen sind, was Farbe, Effekt, Glanz und D.O.I. (distinctiveness of the reflected image) betrifft, von höchster optischer Qualität, haben eine glatte, strukturfreie, harte, flexible und kratzfeste Oberfläche, sind witterungs-, chemikalien- und etch-beständig, sie vergilben nicht und zeigen keine Rißbildung und Delamination der Schichten.

Daher weisen auch die erfindungsgemäßen grundierten und ungrundierten Substrate, insbesondere Karosserien von Automobilen und Nutzfahrzeugen, industrielle Bauteile, inklusive Kunstsstoffteile, Emballagen, Coils und elektrische Bauteile, oder Möbel, die mit mindestens einer erfindungsgemäßen Beschichtung beschichtet, mindestens einer erfindungsgemäßen Dichtung abgedichtet und/oder mit mindestens einem erfindungsgemäßen Klebstoff verklebt sind, besondere technische und wirtschaftliche Vorteile, insbesondere eine lange Gebrauchsdauer auf, was sie für die Anwender besonders attraktiv macht.

### Beispiele

### Herstellbeispiel 1

### Die Herstellung eines Allophanats aus Hexamethylendiisocyanat und 2-Hydroxyethylacrylat

Die Herstellung des Allophanats erfolgte gemäß der deutschen Patentschrift DE-A-198 60 041, Experimenteller Teil 1.1, Produkt Nr. 6. Hierzu wurde Hexamethylendiisocyanat unter Stickstoffbedeckung mit 40 Mol-% (bezogen auf das Isocyanat) 2-Hydroxyethylacrylat vermischt und auf 80°C erwärmt. Nach Zugabe von 200 Gew.-ppm (bezogen auf das Isocyanat) N,N,N-Trimethyl-N-(2-hydroxypropyl)ammonium-2-ethylhexanoat wurde die Reaktionsmischung langsam auf 120°C erhitzt und bei dieser Reaktionstemperatur gehalten. Bei einem Isocyanatgehalt der Reaktionsmischung von 13,5 Gew.-% wurde die Reaktion durch Zugabe von 250 Gew.-ppm (bezogen auf das Isocyanat) Di(2-ethylhexyl)phosphat gestoppt. Die Reaktionsmischung wurde dann im Dünnschichtverdampfer bei 135°C und 2,5 mbar von nichtumgesetztem Hexamethylendüsocyanat befreit. Das resultierende Allophanat hatte nach der Destillation einen Isocyanatgehalt von 13,5 Gew.-% und eine Viskosität von 810 mPas bei 23°C.

### Beispiel 1

### Die Herstellung der erfindungsgemäßen Polyurethandispersion 1

In einem Rührkessel wurden 335 Gewichtsteile des Allophanats des Herstellbeispiels 1 in der angegebenen Reihenfolge mit 30 Gewichtsteilen Hydroxypropylcarbamat, 50 Gewichtsteilen Cyclohexandimethanol, 8 Gewichtsteilen Hydroxyessigsäure und zum Blockieren der überschüssigen Isocyanatgruppen mit 12 Gewichtsteilen n-Butanol umgesetzt Das resultierenden Polyurethan wies eine Säurezahl von 8,5 mg KOH/g auf Es wurde mit 11 Gewichtsteilen Triethylamin neutralisiert. Das neutralisierte Polyurethan wurde in Wasser dispergiert, so daß ein Festkörpergehalt von 43 Gew.% resultierte (1 h / 130°C).

### Beispiel 2

### Die Herstellung der erfindungsgemäßen Polyurethandispersion 2

Beispiel 1 wurde wiederholt, nur daß anstelle des Allophanats gemäß Herstellbeispiel 1 376 Gewichtsteile eines handelsüblichen Isocyanurats von Hexamethylendiisocyanat (Desmodur® N 3300 der Firma Bayer AG) verwendet wurden.

### Beispiele 3 bis 6

### Die Herstellung der erfindungsgemäßen Klarlacke 3 bis 6

Die erfindungsgemäßen Klarlacke 3 bis 6 wurden durch Vermischen der in der Tabelle 1 angegebenen Bestandteile in einem Dissolver (Drehzahl: 3.000 U/min; Scheibendurchmesser: 3 cm; Dauer: 30 min) hergestellt. Bei den Beispielen 5 und 6 wurden das Aminoplastharz und der Katalysator vorgemischt und anschließend in die Dispersion eingerührt.

**Tabelle 1:**

| **Die stoffliche Zusammensetzung der erfindungsgemäßen Klarlacke der Beispiele 3 bis 6** | | | | |
|---|---|---|---|---|
| **Bestandteil** | **Gewichtsteile:** | | | |
| | **Beispiel** | | | |
| | **3** | **4** | **5** | **6** |
| Polyurethandispersion 1 | 100 | - | 100 | - |
| Polyurethandispersion 2 | - | 100 | - | 100 |
| Byk® 348^{a)} | 0,4 | 0,4 | 0,4 | 0,4 |
| Irgacure® 184 ^{b)} | 2,7 | 2,7 | 2,7 | 2,7 |
| Cymel® 325 ^{c)} | - | - | 3 | 3 |
| Katalysator^{d)} | - | - | 0,06 | 0,06 |

| | | | | |
|---|---|---|---|---|
| a) Polyethermodifiziertes Polydimethylsiloxan der Firma Byk | | | | |
| b) 1-Hydroxy-cyclohexyl-phenylketon, 50%-ig in Texanol/Isopropanol 1 : 2 (Firma Ciba Additivs) | | | | |
| c) Handelsübliches Aminoplastharz der Firma Cytec | | | | |
| d) amingeblockte Benzolsulfonsäure (Nacure ® 2500 der Firma King Industries) | | | | |

Bei den Klarlacken der Beispiele 3 und 4 handelt es sich um thermisch selbstvemetzende Klarlacke.

Bei den Klarlacken der Beispiele 5 und 6 handelt es sich um thermisch fremdvernetzende Klarlacke.

### Beispiele 7 bis 10

### Die Herstellung der erfindungsgemäßen farbgebenden Mehrschichtlackierungen 7 bis 10

Für das Beispiel 7 wurde der Klarlack 3, für das Beispiel 8 der Klarlack 4, für das Beispiel 9 der Klarlack 5 und für das Beispiel 10 der Klarlack 6 verwendet.

Auf mit einem handelsüblichen Elektrotauchlack (Cathoguard® 500 der Firma BASF Coatings AG) kathodisch beschichteten Stahltafeln (Elektrotauchlackierung mit einer Schichtdicke von 18-22 µm) wurde mit einer Becherpistole zunächst ein handelsüblicher wäßriger Füller (Ecoprime® R130 der Firma BASF Coatings AG) appliziert und eingebrannt. Es resultierte eine Füllerlackierung mit einer Schichtdicke von 35 bis 40 µm. Anschließend wurde auf den Füller in gleicher Weise ein schwarzer Wasserbasislack (Basislack nachtschwarz FV96-9400 der Firma BASF Coatings AG) appliziert und während 10 min bei 80 °C vorgetrocknet. Nach dem Abkühlen der Tafeln wurde jeweils jeweils eine Schicht aus Klarlacken 3 bis 6 mit einer Becherpistole in einer Naßschichtdicke von 150 µm aufgetragen und während 10 min bei Raumtemperatur abgelüftet und während 2 min bei Raumtemperatur vorgetrocknet (Naß-in-naß-Verfahren).

Anschließend wurden die Prüftafeln mit UV-Strahlung mit einer Dosis von 1.500 mJ/cm² bestrahlt Danach wurden sie während 30 min bei 150 °C eingebrannt (Dual Cure). Es resultierte eine Basislackierung einer Trockenschichtdicke von 16 µm und eine Klarlackierung einer Trockenschichtdicke von 45 µm.

Die Kratzfestigkeit wurde nach dem Sandtest bestimmt. Hierzu wurden die Lackoberflächen mit Sand belastet (20g Quarz-Silbersand 1,5-2,0 mm). Der Sand wurde in Becher (Boden plan abgeschnitten) gegeben, die fest auf den Prüftafeln der Beispiele 7 bis 10 befestigt wurden. Mittels eines Motorantriebes wurde die Prüftafeln mit den Bechern und dem Sand in Schüttelbewegungen versetzt. Die Bewegung des losen Sandes verursachte dabei die Beschädigung der Lackoberflächen (100 Doppelhübe in 20 s). Nach der Sandbelastung wurden die Prüfflächen vom Abrieb gereinigt, unter einem kalten Wasserstrahl vorsichtig abgewischt und anschließend mit Druckluft getrocknet Gemessen wurde der Glanz nach DIN 67530 vor und nach Beschädigung (Meßrichtung senkrecht zur Kratzrichtung). Die Tabelle 2 gibt einen Überblick über die erhaltenen Ergebnisse.

**Tabelle 2:**

| **Kratzfestigkeit der erfindungsgemäßen Mehrschichtlackierungen 7 bis 10 nach dem Sandtest** | | | | |
|---|---|---|---|---|
| **Glanz nach DIN 67530** | **Beispiele:** | | | |
| | **7** | **8** | **9** | **10** |
| Anfang | 81,6 | 82,6 | 81 | 83,4 |
| nach Schädigung | 27,7 | 43,9 | 60,6 | 76,7 |
| 2h bei 40°C | 27,4 | 30,4 | 64,6 | 76,7 |
| 2h bei 60°C | 29,8 | 40,3 | 64,6 | 78,1 |

Der Sandtest untermauerte die hohe Kratzfestigkeit der erfindungsgemäßen Mehrschichtlackierungen der Beispiele 9 und 10. Die aus den thermisch selbstvernetzenden Klarlacken 3 und 4 hergestellten Mehrschichtlackierungen erreichen nicht ganz das hohe Niveau.

### Beispiele 11 bis 14

### Die Herstellung der erfindungsgemäßen Klarlackierungen 11 bis 14

Für das Beispiel 11 wurde der Klarlack 3, für das Beispiel 12 der Klarlack 4, für das Beispiel 13 der Klarlack 5 und für das Beispiel 14 der Klarlack 6 verwendet.

Für die Beispiele 11 bis 14 wurden die Klarlacke 3 bis 6 auf Prüftafel appliziert, wie sie üblicherweise für die Messung der Mikroeindringhärte verwendet werden. Es wurden für die Aushärtung dieselben Bedingungen wie bei den Beispielen 7 bis 10 angewandt. Die Trockenschichtdicke der erfindungsgemäßen Klarlackierungen 11 bis 14 lag bei 45 µm.

Die in der Tabelle 3 zusammengestellten Ergebnisse belegen die gute mechanische Stabilität der Klarlackienmgen 11 und 12, die aus den thermisch selbstvernetzenden Klarlacken 3 und 4 hergestellten worden waren. Durch die Verwendung von Vernetzungsmitteln konnte das Niveau noch signifikant gesteigert werden (vgl. die Beispiele 13 und 14).

**Tabelle 3:**

| **Mikroeindringhärte und Kriechverhalten bei 25,6 mN der Klarlackierungen 11 bis 14** | | | | | | |
|---|---|---|---|---|---|---|
| **Beispiele** | **Parameter:** | | | | | |
| | **I** | **II** | **III** | **IV** | **V** | **VI** |
| 11 | 126,4 | 10,2 | 2,77 | 41,5 | 20 | -36 |
| 12 | 137,8 | 14,4 | 2,66 | 37,8 | 18,4 | -35,6 |
| 13 | 161,9 | 11,7 | 2,45 | 47,3 | 11,8 | -21,4 |
| 14 | 163,4 | 1,7 | 2,43 | 49,2 | 8,2 | -23,2 |
| I Universalhärte bei 25,6 mN (N/mm²) II Standardabweichung der Universalhärte III mittlere Eindringtiefe (µm) IV relative elastische Tiefenrückfederung (%) V Kriechverhalten bei 25,6 mN (%) VI Kriechverhalten bei 0,4 mN (%) | | | | | | |

### Beispiele 15 bis 18

### Die Herstellungder erfindungsgemäßen Klarlackierungen 15 bis 18

Für das Beispiel 15 wurde der Klarlack 3, für das Beispiel 16 der Klarlack 4, für das Beispiel 17 der Klarlack 5 und für das Beispiel 18 der Klarlack 6 verwendet.

Für die Beispiele 15 bis 18 wurden die Klarlacke 3 bis 6 auf Stahltafeln mit weißen Basislackierungen appliziert. Es wurden für die Aushärtung dieselben Bedingungen wie bei den Beispielen 7 bis 10 angewandt. Die Trockenschichtdicke der erfindungsgemäßen Klarlackierungen 11 bis 14 lag bei 45 µm.

Die Tabelle 4 gibt einen Überblick über die Neigung der Klarlackierungen 11 bis 14, zu vergilben. Die Vergilbungsbeständigkeit wurde mittels farbmetrischer Gelbwertbestimmung nach der Cielab-Methode bestimmt. Die Ergebnisse belegen die hohe Vergilbungsbeständigkeit.

**Tabelle 4:**

| **Die Vergilbungsbeständigkeit der erfindungsgemäßen Klarlackierungen nach der Gelbwertbestimmung gemäß der Cielab-Methode** | | | | | | |
|---|---|---|---|---|---|---|
| **Beispiele** | **Anfang:** | | | **Nach einer Woche:** | | |
| | **L*** | **a*** | **b*** | **L*** | **a*** | **b*** |
| 15 | 89,0 | -2,2 | 2,6 | 88,4 | -2,1 | 2,5 |
| 16 | 88,8 | -2,1 | 4,8 | 88,7 | -2,3 | 3,6 |
| 17 | 87,9 | -2,3 | 3,6 | 87,8 | -2,3 | 3,6 |
| 18 | 88,7 | -2,0 | 3,4 | 88,7 | -2,0 | 3,2 |

## Patentansprüche

1. Wäßrige Dispersion, die mindestens ein Polymer mit im statistischen Mittel
(i) mindestens einer primären und/oder sekundären Carbamatgruppe,
(ii) mindestens einer funktionellen Gruppe mit mindestens einer mit aktinischer Strahlung aktivierbaren Bindung und
(iii) mindestens einer dispergierenden ionischen funktionellen Gruppe
enthält.

2. Wäßrige. Dispersion nach Anspruch 1, **dadurch gekennzeichnet, daß** die dispergierenden ionischen funktionellen Gruppen in einer Menge vorhanden sind, daß, bezogen auf den Festkörper der Dispersion, eine Säurezahl oder Aminzahl von 3,0 bis 100 mg KOH/g resultiert.

3. Wäßrige Dispersion nach Anspruch 1 oder 2, **dadurch gekennzeichnet, daß** die dispergierenden ionischen funktionellen Gruppen anionische Gruppen sind.

4. Wäßrige Dispersion nach einem der Ansprüche 1 bis 3, **dadurch gekennzeichnet, daß** der Neutralisationsgrad der dispergierenden ionischen funktionellen Gruppen mindestens 60 Mol-% beträgt.

5. Wäßrige Dispersion nach Anspruch 4, **dadurch gekennzeichnet, daß** der Neutralisationsgrad mindestens 95 Mol-% beträgt.

6. Wäßrige Dispersion nach einem der Ansprüche 1 bis 5, **dadurch gekennzeichnet, daß** primäre Carbamatgruppen verwendet werden.

7. Wäßrige Dispersion nach einem der Ansprüche 1 bis 6, **dadurch gekennzeichnet, daß** das Polymer im statistischen Mittel mindestens zwei Carbamatgruppen enthält.

8. Wäßrige Dispersion nach einem der Ansprüche 1 bis 7, **dadurch gekennzeichnet, daß** das Polymer
(iv) mindestens eine isocyanatreaktive funktionelle Gruppe
enthält.

9. Wäßrige Dispersion nach Anspruch 8, **dadurch gekennzeichnet, daß** als isocyanatreaktive funktionelle Gruppen Thiol-, Hydroxyl- und/oder primäre und/oder sekundäre Aminogruppen verwendet werden.

10. Wäßrige Dispersion nach einem der Ansprüche 1 bis 9, **dadurch gekennzeichnet, daß** als mit aktinischer Strahlung aktivierbare Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen verwendet werden.

11. Wäßrige Dispersion nach Anspruch 10, **dadurch gekennzeichnet, daß** Kohlenstoff-Kohlenstoff-Doppelbindungen verwendet werden

12. Wäßrige Dispersion nach Anspruch 11, **dadurch gekennzeichnet, daß** die Doppelbindungen als (Meth)Acrylat-, Ethacrylat-, Crotonat-, Cinnamat-, Vinylether-, Vinylester-, Dicyclopentadienyl-, Norbornenyl-, Isoprenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen vorliegen.

13. Wäßrige Dispersion nach einem der Ansprüche 1 bis 12, **dadurch gekennzeichnet, daß** als dispergierende anionische funktionelle Gruppen Carboxylat-, Sulfonat- und/oder Phosphonatgruppen verwendet werden.

14. Wäßrige Dispersion nach einem der Ansprüche 1 bis 13, **dadurch gekennzeichnet, daß** als Polymer mindestens ein Polyurethan verwendet wird.

15. Wäßrige Dispersion nach Anspruch 14, **dadurch gekenneichnet, daß** das Polyurethan herstellbar ist, indem man
(A) mindestens ein aliphatisches Polyisocyanat mit einer Isocyanatfunlctionalität von 2,0 bis 6,0 mit
(B) mindestens einer Verbindung mit mindestens einer isocyanatreaktiven funktionellen Gruppe sowie mindestens einer mit aktinischer Strahlung aktivierbaren Bindung,
(C) mindestens einer niedermolekularen aliphatischen Verbindung mit mindestens zwei isocyanatreaktiven funktionellen Gruppen,
D) mindestens einer Verbindung mit mindestens einer isocyanatreaktiven funktionellen Gruppe und mindestens einer dispergierenden potentiell ionischen funktionellen Gruppe,
(E) mindestens einem Neutralisationsmittel für die dispergierenden potentiell ionischen funktionellen Gruppen der Verbindung (D) und
(F) mindestens einer Verbindung mit mindestens einer primären und/oder sekundären Carbamatgruppe und/oder mindestens einer funktionellen Gruppe, die in eine Carbamatgruppen überführt werden kann, und mindestens einer isocyanatreaktiven Gruppe sowie gegebenenfalls
(G) mindestens einer von den Verbindungen (B) bis (F) verschiedenen Verbindung mit einer isocyanatreaktiven funktionellen Gruppe
umsetzt.

16. Wäßrige Dispersion nach Anspruch 15, **dadurch gekennzeichnet, daß** als Verbindungen (A) Isocyanurat-, Biuret-, Allophanat-, Iminooxadiazindion-, Urethan-, Hamstoff-, Carbodiimid- und/oder Uretdiongruppen aufweisende aliphatische Polyisocyanate verwendet werden.

17. Wäßrige Dispersion nach Anspruch 16, **dadurch gekennzeichnet, daß** Allophanat- und/oder Isocyanuratgruppen aufweisende Polyisocyanate (A) auf Basis von Hexamethylendiisocyanat verwendet werden.

18. Wäßrige Dispersion nach einem der Ansprüche 15 bis 17, **dadurch gekennzeichnet, daß** man als Verbindungen (B) Allylalkohol, 4-Butylvinylether, Hydroxyalkyl- und Hydroxycycloalkylester der (Meth)Acrylsäure und/oder Umsetzungsprodukte aus cyclischen Estern und Hydroxyalkyl- und Hydroxycycloalkylester der (Meth)Acrylsäure verwendet.

19. Wäßrige Dispersion nach einem der Ansprüche 15 bis 18, **dadurch gekennzeichnet, daß** man als Verbindungen (C) Polyole, Polyamine und/oder Aminoalkohole verwendet.

20. Wäßrige Dispersion nach einem der Ansprüche 15 bis 19, **dadurch gekennzeichnet, daß** man als Verbindungen (D) Mercapto-, Hydroxy-, Amino- oder Iminocarbonsäuren, -phosphonsäuren oder -sulfonsäuren verwendet.

21. Wäßrige Dispersion nach einem der Ansprüche 15 bis 20, **dadurch gekennzeichnet, daß** man dispergierende (potentiell) anionische funktionelle Gruppen und als Neutralisationsmittel (E) organische Amine verwendet werden.

22. Wäßrige Dispersion nach einem der Ansprüche 15 bis 21, **dadurch gekennzeichnet, daß** man als Verbindungen (F) Hydroxyalkylcarbamate verwendet.

23. Wäßrige Dispersion nach einem der Ansprüche 15 bis 22, **dadurch gekennzeichnet, daß** man als Verbindungen (G) Alkohole und/oder Monoamine verwendet.

24. Verwendung der wäßrigen Dispersion gemäß einem der Ansprüche 1 bis 23 für die Herstellung von Beschichtungsstoffen, Klebstoffen und Dichtungsmassen.

25. Verwendung nach Anspruch 24, **dadurch gekennzeichnet, daß** die Beschichtungsstoffe zur Herstellung von ein- oder mehrschichtigen Klarlackierungen und/oder farb- und/oder effektgebenden Lackierungen verwendet werden.

26. Verwendung nach Anspruch 24 oder 25, **dadurch gekennzeichnet, daß** die Beschichtungsstoffe als Füller, Unidecklacke, Basislacke und/oder Klarlacke verwendet werden.

27. Beschichtungsstoffe, Klebstoffe und Dichtungsmassen, die mindestens eine Dispersion gemäß einem der Ansprüche 1 bis 23 enthalten oder hieraus bestehen.

28. Beschichtungsstoffe, Klebstoffe und Dichtungsmassen nach Anspruch 27, **dadurch gekennzeichnet, daß** sie mindestens ein Aminoplastharz als Vernetzungsmittel enthalten.

29. Beschichtungsstoffe, Klebstoffe und Dichtungsmassen nach Anspruch 27 oder 28, **dadurch gekennzeichnet, daß** als Aminoplastharze Melaminharze, Guanaminharze und/oder Harnstoffharze verwendet werden.

30. Beschichtungsstoffe, Klebstoffe und Dichtungsmassen nach einem der Ansprüche 27 bis 29, **dadurch gekennzeichnet, daß** sie mindestens eine mit Aminen blockierte organische Sulfonsäure als Katalysator enthalten.

## Claims

1. Aqueous dispersion comprising at least one polymer containing on average
(i) at least one primary and/or secondary carbamate group,
(ii) at least one functional group having at least one bond which may be activated with actinic radiation, and
(iii) at least one dispersive ionic functional group.

2. Aqueous dispersion according to Claim 1, **characterized in that** the dispersive ionic functional groups are present in an amount such as to give, based on the solids of the dispersion, an acid number or amine number of from 3.0 to 100 mg KOH/g.

3. Aqueous dispersion according to Claim 1 or 2, **characterized in that** the dispersive ionic functional groups are anionic groups.

4. Aqueous dispersion according to any of Claims 1 to 3, **characterized in that** the degree of neutralization of the dispersive ionic functional groups is at least 60 mol%.

5. Aqueous dispersion according to Claim 4, **characterized in that** the degree of neutralization is at least 95 mol%.

6. Aqueous dispersion according to any of Claims 1 to 5, **characterized in that** primary carbamate groups are used.

7. Aqueous dispersion according to any of Claims 1 to 6, **characterized in that** the polymer contains on average at least two carbamate groups.

8. Aqueous dispersion according to any of Claims 1 to 7, **characterized in that** the polymer contains
(iv) at least one isocyanate-reactive functional group.

9. Aqueous dispersion according to Claim 8, **characterized in that** the isocyanate-reactive functional groups are thiol, hydroxyl and/or primary and/or secondary amino groups.

10. Aqueous dispersion according to any of Claims 1 to 9, **characterized in that** the bonds that may be activated with actinic radiation are carbon-hydrogen single bonds or carbon-carbon, carbon-oxygen, carbon-nitrogen, carbon-phosphorus, or carbon-silicon single or double bonds.

11. Aqueous dispersion according to Claim 10, **characterized in that** carbon-carbon double bonds are used.

12. Aqueous dispersion according to Claim 11, **characterized in that** the double bonds are present as (meth)acrylate, ethacrylate, crotonate, cinnamate, vinyl ether, vinyl ester, dicyclopentadienyl, norbornenyl, isoprenyl, isopropenyl, allyl, or butenyl groups; dicyclopentadienyl ether, norbornenyl ether, isoprenyl ether, isopropenyl ether, allyl ether, or butenyl ether groups; or dicyclopentadienyl ester, norbornenyl ester, isoprenyl ester, isopropenyl ester, allyl ester, or butenyl ester groups.

13. Aqueous dispersion according to any of Claims 1 to 12, **characterized in that** the dispersive anionic functional groups are carboxylate, sulphonate and/or phosphonate groups.

14. Aqueous dispersion according to any of Claims 1 to 13, **characterized in that** the polymer comprises at least one polyurethane.

15. Aqueous dispersion according to Claim 14, **characterized in that** the polyurethane is preparable by reacting
(A) at least one aliphatic polyisocyanate having an isocyanate functionality of from 2.0 to 6.0 with
(B) at least one compound containing at least one isocyanate-reactive functional group and at least one bond that may be activated with actinic radiation,
(C) at least one low molecular mass aliphatic compound containing at least two isocyanate-reactive functional groups,
(D) at least one compound containing at least one isocyanate-reactive functional group and at least one dispersive potentially ionic, functional group,
(E) at least one neutralizing agent for the dispersive potentially ionic functional groups of the compound (D), and
(F) at least one compound containing at least one primary and/or secondary carbamate group and/or at least one functional group which may be converted into a carbamate group, and at least one isocyanate-reactive group, and also, if desired,
(G) at least one compound containing an isocyanate-reactive functional group, other than the compounds (B) to (F).

16. Aqueous dispersion according to Claim 15, **characterized in that** the compounds (A) comprise aliphatic polyisocyanates containing isocyanurate, biuret, allophanate, iminooxadiazinedione, urethane, urea, carbodiimide and/or uretdione groups.

17. Aqueous dispersion according to Claim 16, **characterized in that** polyisocyanates (A) based on hexamethylene diisocyanate and containing allophanate and/or isocyanurate groups are used.

18. Aqueous dispersion according to any of Claims 15 to 17, **characterized in that** the compounds (B) comprise allyl alcohol, 4-butyl vinyl ether, hydroxyalkyl esters and hydroxycycloalkyl esters of (meth)acrylic acid and/or reaction products of cyclic esters and hydroxyalkyl and hydroxycycloalkyl esters of (meth)acrylic acid.

19. Aqueous dispersion according to any of Claims 15 to 18, **characterized in that** the compounds (C) comprise polyols, polyamines and/or amino alcohols.

20. Aqueous dispersion according to any of Claims 15 to 19, **characterized in that** the compounds (D) comprise mercapto-, hydroxy-, amino- or iminocarboxylic, -phosphonic or -sulphonic acids.

21. Aqueous dispersion according to any of Claims 15 to 20, **characterized in that** dispersive (potentially) anionic functional groups and, as neutralizing agents (E), organic amines are used.

22. Aqueous dispersion according to any of Claims 15 to 21, **characterized in that** as compounds (F) hydroxyalky carbamates are used.

23. Aqueous dispersion according to any of Claims 15 to 22, **characterized in that** as compounds (G) alcohols and/or monoamines are used.

24. Use of the aqueous dispersion according to any of Claims 1 to 23 to prepare coating materials, adhesives and sealing compounds.

25. Use according to Claim 24, **characterized in that** the coating material is used to produce single-coat or multicoat clearcoats and/or colour and/or effect coating systems.

26. Use according to Claim 24 or 25, **characterized in that** the coating material is used as a surfacer, solid-colour topcoat, basecoat and/or clearcoat.

27. Coating materials, adhesives and sealing compounds consisting of or comprising at least one dispersion according to any of Claims 1 to 23.

28. Coating materials, adhesives and sealing compounds according to Claim 27, **characterized in that** they comprise at least one amino resin as crosslinking agent.

29. Coating materials, adhesives and sealing compounds according to Claim 27 or 28, **characterized in that** the amino resins comprise melamine resins, guanamine resins and/or urea resins.

30. Coating materials, adhesives and sealing compounds according to any of Claims 27 to 29, **characterized in that** they comprise at least one amine-blocked organic sulphonic acid as catalyst.

## Revendications

1. Dispersion aqueuse qui contient au moins un polymère comportant en moyenne statistique
(i) au moins un groupe carbamate primaire et/ou secondaire,
(ii) au moins un groupe fonctionnel comportant au moins une liaison activable par un rayonnement actinique, et
(iii) au moins un groupe fonctionnel ionique dispersant.

2. Dispersion aqueuse selon la revendication 1, **caractérisée en ce que** les groupes fonctionnels ioniques dispersants sont présents en une quantité telle qu'il en résulte, par rapport à la matière solide de la dispersion, un indice d'acide ou un indice d'amine de 3,0 à 100 mg de KOH/g.

3. Dispersion aqueuse selon la revendication 1 ou 2, **caractérisée en ce que** les groupes fonctionnels ioniques dispersants sont des groupes anioniques.

4. Dispersion aqueuse selon l'une quelconque des revendications 1 à 3, **caractérisée en ce que** le degré de neutralisation des groupes fonctionnels ioniques dispersants est d'au moins 60 % en moles.

5. Dispersion aqueuse selon la revendication 4, **caractérisée en ce que** le degré de neutralisation est d'au moins 95 % en moles.

6. Dispersion aqueuse selon l'une quelconque des revendications 1 à 5, **caractérisée en ce que** des groupes carbamate primaires sont utilisés.

7. Dispersion aqueuse selon l'une quelconque des revendications 1 à 6, **caractérisée en ce que** le polymère comporte en moyenne statistique au moins deux groupes carbamate.

8. Dispersion aqueuse selon l'une quelconque des revendications 1 à 7, **caractérisée en ce que** le polymère comporte
(iv) au moins un groupe fonctionnel réactif avec un isocyanate.

9. Dispersion aqueuse selon la revendication 8, **caractérisée en ce qu'**on utilise en tant que groupes fonctionnels réactifs avec un isocyanate des groupes thiol, hydroxy et/ou des groupes amino primaires et/ou secondaires.

10. Dispersion aqueuse selon l'une quelconque des revendications 1 à 9, **caractérisée en ce qu'**on utilise en tant que liaisons activables par un rayonnement actinique des liaisons simples carbone-hydrogéne ou des liaisons simples ou doubles carbone-carbone, çarbone-oxygène, carbone-azote, carbone-phosphore ou carbone-silicium.

11. Dispersion aqueuse selon la revendication 10, **caractérisée en ce qu'**on utilise des doubles liaisons carbone-carbone.

12. Dispersion aqueuse selon la revendication 11, **caractérisée en ce que** les doubles liaisons sont présentes sous forme de groupes (méth)acrylate, éthacrylate, crotonate, cinnamate, éther vinylique, ester vinylique, dicyclopentadiényle, norbornényle, isoprényle, isopropényle, allyle ou butényle ; des groupes éther dicyclopentadiénylique, norbornénylique, isoprénylique, isopropénylique, allylique ou buténylique, ou des groupes ester dicyclopentadiénylique, norbornénylique, isoprénylique, isopropénylique, allylique ou buténylique.

13. Dispersion aqueuse selon l'une quelconque des revendications 1 à 12, **caractérisée en ce qu'**on utilise en tant que groupes fonctionnels anioniques dispersants des groupes carboxylate, sulfonate et/ou phosphonate.

14. Dispersion aqueuse selon l'une quelconque des revendications 1 à 13, **caractérisée en ce qu'**on utilise en tant que polymère au moins un polyuréthanne.

15. Dispersion aqueuse selon la revendication 14, **caractérisée en ce qu'**on peut préparer le polyuréthanne en faisant réagir
(A) au moins un polyisocyanate aliphatique ayant une fonctionnalité isocyanate de 2,0 à 6,0 avec
(B) au moins un composé comportant au moins un groupe fonctionnel réactif avec un isocyanate ainsi qu'au moins une liaison activable par un rayonnement actinique,
(C) au moins un composé aliphatique de faible masse moléculaire, comportant au moins deux groupes fonctionnels réactifs avec un isocyanate,
(D) au moins un composé comportant au moins un groupe fonctionnel réactif avec un isocyanate et au moins un groupe fonctionnel potentiellement ionique dispersant,
(E) au moins un agent de neutralisation pour les groupes fonctionnels dispersants potentiellement ioniques du composé (D), et
(F) au moins un composé comportant au moins un groupe carbamate primaire et/ou secondaire et/ou au moins un groupe fonctionnel qui peut être converti en un groupe carbamate, et au moins un groupe réactif avec un isocyanate, ainsi qu'éventuellement
(G) au moins un composé comportant un groupe fonctionnel réactif avec un isocyanate, différent des composés (B) à (F).

16. Dispersion aqueuse selon la revendication 15, **caractérisée en ce qu'**on utilise en tant que composés (A) des polyisocyanates aliphatiques comportant des groupes isocyanurate, biuret, allophanate, imino-oxadiazinedione, uréthanne, urée, carbodiimide et/ou uretdione.

17. Dispersion aqueuse selon la revendication 16, **caractérisée en ce qu'**on utilise des polyisocyanates (A) à base d'hexaméthylènediisocyanate, comportant des groupes allophanate et/ou isocyanurate.

18. Dispersion aqueuse selon l'une quelconque des revendications 15 à 17, **caractérisée en ce qu'**on utilise comme composés (B) l'alcool allylique, l'éther 4-butylvinylique, des esters hydroxyalkyliques et hydroxycycloalkyliques de l'acide (méth)acrylique et/ou des produits de réaction d'esters cycliques et d'esters hydroxyalkyliques et hydroxycycloalkyliques de l'acide (méth)acrylique.

19. Dispersion aqueuse selon l'une quelconque des revendications 15 à 18, **caractérisée en ce qu'**on utilise en tant que composés (C) des polyols, des polyamines et/ou des aminoalcools.

20. Dispersion aqueuse selon l'une quelconque des revendications 15 à 19, **caractérisée en ce qu'**on utilise en tant que composés (D) des acides mercapto-, hydroxy-, amino- ou iminocarboxyliques, -phosphoniques ou -sulfoniques.

21. Dispersion aqueuse selon l'une quelconque des revendications 15 à 20, **caractérisée en ce qu'**on utilise des groupes fonctionnels (potentiellement) anioniques dispersants et, en tant qu'agent de neutralisation (E), des amines organiques.

22. Dispersion aqueuse selon l'une quelconque des revendications 15 à 21, **caractérisée en ce qu'**on utilise en tant que composés (F) des carbamates d'hydroxyalkyle.

23. Dispersion aqueuse selon l'une quelconque des revendications 15 à 22, **caractérisée en ce qu'**on utilise en tant que composés (G) des alcools et/ou des monoamines.

24. Utilisation de la dispersion aqueuse selon l'une quelconque des revendications 1 à 23, pour la préparation de matières de revêtements, d'adhésifs et de matériaux d'étanchéité.

25. Utilisation selon la revendication 24, **caractérisée en ce que** les matières de revêtement sont utilisées pour la production de revêtements de vernis et/ou de revêtements de peinture colorants et/ou à effet, mono- ou multicouches.

26. Utilisation selon la revendication 24 ou 25, **caractérisée en ce que** les matières de revêtement sont utilisées en tant qu'apprêts de garnissage, peintures de finition universelles, peintures de fond et/ou vernis.

27. Matières de revêtement, adhésifs et matériaux d'étanchéité, qui contiennent ou consistent en au moins une dispersion selon l'une quelconque des revendications 1 à 23.

28. Matières de revêtement, adhésifs et matériaux d'étanchéité selon la revendication 27, **caractérisés en ce qu'**ils contiennent au moins un aminoplaste en tant qu'agent de réticulation.

29. Matières de revêtement, adhésifs et matériaux d'étanchéité selon la revendication 27 ou 28, **caractérisés en ce qu'**on utilise en tant qu'aminoplastes des résines mélamine, des résines guanamine et/ou des résines urée.

30. Matières de revêtement, adhésifs et matériaux d'étanchéité selon l'une quelconque des revendications 27 à 29, **caractérisés en ce qu'**ils contiennent en tant que catalyseur au moins un acide sulfonique organique bloqué avec des amines.
